# EUROPEAN PATENT SPECIFICATION

(11) **EP 0 743 286 B1**
(45) Date of publication and mention of the grant of the patent: **15.07.1998**
(21) Application number: 96303020.0
(22) Date of filing: 30.04.1996
(51) Int. Cl.: C03B 5/00, C03B 3/02, C03B 5/235, B09B 3/00

(54) **Method of melting treatment of incineration fly ash**
Verfahren zum Schmelzen von Verbrennungsaschen
Procédé de fusion de cendres

(30) Priority: 18.05.1995 JP 145521/95
(43) Date of publication of application: 20.11.1996
(73) Proprietor: DAIDO TOKUSHUKO KABUSHIKI KAISHA, Naka-ku Nagoya-shi Aichi-ken (JP)
(72) Inventor: Kintou, Kouichiro, Yokkaichi-shi, Mie-ken (JP); Okamoto, Tetsuo, Chita-shi, Aichi-ken (JP); Saeda, Tadatoshi, Nagoya-shi, Aichi-ken (JP); Sakai, Hideharu, Nagoya-shi, Aichi-ken (JP)
(74) Representative: Whalley, Kevin

(56) References cited:
- FR-A- 2 689 213
- US-A- 3 337 324
- US-A- 4 539 035
- US-A- 5 281 790
- US-A- 5 309 850
- PATENT ABSTRACTS OF JAPAN vol. 12, no. 292 (M-729) & JP-A-63 070015 (DAIDO STEEL CO., LTD.), 30 March 1988,

## Description

The present invention relates to a method of melting treatment of incineration fly ash.

When various kinds of refuse such as city garbage, sewer sludge, or industrial wastes are incinerated, incineration bottom ash discharged from an incinerator and incineration fly ash caught by an air pollution control system are produced. In the air pollution control system of the incinerator, In order to neutralize various kinds of acid gases and harmful materials such as dioxin involved in a exhaust gas, calcium oxide is normally blown into the exhaust gas. As a result, the incineration fly ash caught by the air pollution control system comes to contain a considerable amount of neutralized material of calcium oxide or non-reacted calcium oxide. Such incineration fly ash is, in order to decrease the volume thereof and stabilize it, subjected to melting treatment using an arc furnace or a resistance furnace or a burner furnace. The present invention relates to a method of melting treatment of the above-described incineration fly ash using a burner furnace.

Conventionally, as a method of melting treatment of refuse using a burner furnace, there has been employed a method in which the refuse is supplied from the side direction or oblige direction with respect to the flame of the burner using air as oxidizing gas (Japanese Patent Laid-open No. 63-70015). However, such a conventional method has defects as follows.
1) Since air is used as oxidizing gas of the burner, the flame temperature is low and the amount of exhaust gas is large. When the flame temperature is low, since the above-described incineration fly ash containing a considerable amount of neutralized material of calcium oxide and non-reacted calcium oxide has a high melting point, the melting treatment of the incineration fly ash cannot be sufficiently carried out. When the amount of the exhaust gas is large, the heat loss thereof is large and further a large air pollution control equipment is required.
2) Since the refuse is supplied from the side direction or oblique direction with respect to the flame of the burner, the contact time therebetween is short, and some of the supplied refuse misses the flame of the burner. When the contact time between the flame of the burner and the supplied refuse is short, and when the supplied refuse misses the flame of the burner, the melting treatment thereof becomes incomplete.

The present invention is intended to overcome the defects of the conventional method for the melting treatment of incineration fly ash.

The present invention provides a method of melting treatment of incineration fly ash by subjecting incineration fly ash to melting treatment using a burner furnace, wherein incineration fly ash is supplied by gas transportation into a high temperature flame of an oxygen burner burning downward and is melted, produced melted matter is discharged from an outlet at a lower portion of a furnace side wall, while generatged exhaust gas is discharged from a vent at an upper portion of the furnace side wall.

In the present invention, the incineration fly ash is subjected to melting treatment using a burner furnace. At least an inner surface of the burner furnace is made of a refractory material. In the space of the furnace surrounded by the refractory material, the incineration fly ash is melted by the high temperature flame of an oxygen burner. Since the oxygen burner uses oxygen enriched gas, as compared with the case in which air is used as a oxidizing gas, a high temperature flame can be obtained so that melting of even incineration fly ash having a high melting point can be ensured. In order to promote increased reliability in melting the incineration fly ash, it is preferable to use a oxidizing gas with an oxygen concentration of 90 vol. % or more. The higher is the oxygen concentration of the oxidizing gas, the higher is the temperature flame which can be obtained. Thus, the incineration fly ash can be melted with increased reliability, and at the same time the amount of exhaust gas becomes small. Thus, the heat loss due to the exhaust gas becomes small so that the air pollution control equipment can be made compact.

The oxygen burner is inserted into the space in the furnace such that at least the tip portion thereof is directed vertically downward. Accordingly, the oxygen burner is normally inserted from a furnace cover into the space in the furnace in the vertical direction . When the oxygen burner is inserted in such a manner , a high temperature flame burning downward can be obtained. If the oxygen burner were inserted such that the tip portion is directed upward, the produced melted matter may close the nozzle at the tip portion . Also, if the oxygen burner were inserted such that the tip portion is directed sideways or obliquely, the high temperature flame would damage the opposing furnace wall locally.

In the present invention, the incineration fly ash is supplied by gas transportation into the high temperature flame of the oxygen burner burning downward and is melted. The incineration fly ash is directly supplied by the gas transportation into the high temperature flame of the oxygen burner burning downward . Such direct supply can be achieved by arranging, for example, nozzles at the tip portion in the order of a fuel supply nozzle, an incineration fly ash (treated matter) supply nozzle, and a oxidizing gas supply nozzle from the center portion to the outer portion so that the entire nozzles are concentrically arranged . Even if the high temperature flame of the oxygen burner is burning downward , if the incineration fly ash is supplied by gas transportation into such high temperature flame from the side direction or oblique direction, the contact time therebetween is short, and some of the incineration fly ash may miss the high temperature flame, so that the melting thereof becomes incomplete.

For the oxygen burner , it is preferable to use nozzles at the tip portion arranged in the order of a fuel supply nozzle, a primary oxidizing gas supply nozzle, an incineration fly ash (treated matter) supply nozzle, and a secondary oxidizing gas supply nozzle from the center portion to the outer portion so that the entire nozzles are concentrically arranged. The fuel supply nozzle is disposed at the center portion, and at the outside thereof an oxidizing gas supply nozzle is divided into an inner primary oxidizing gas supply nozzle and an outer secondary oxidizing gas supply nozzle, so that the nozzles are disposed at both sides of the incineration fly ash (treated matter) supply nozzle. When the respective nozzles are arranged in this way, it is possible to form a burning stable band of excess fuel at the center portion, the incineration fly ash can be supplied into the highest temperature flame, and the supplied incineration fly ash can be prevented from flying out of the high temperature flame in the non-melted state. Accordingly, the melting of the incineration fly ash can be achieved with increased reliability.

In the present invention, the produced melted matter is discharged from the outlet at the lower portion of the furnace side wall, while the generated exhaust gas is discharged from the vent at the upper portion of the furnace side wall. Preferably, the incineration fly ash in the exhaust gas discharged from the vent is collected by a bag filter. In the burner furnace used in the present invention, the outlet for the melted matter is disposed at the lower portion of the furnace side wall, and the vent for the exhaust gas is disposed at the upper portion of the furnace side wall. Preferably, the bag filter is connected to the vent through a duct.In the case where the bag filter is connectd to the vent through the duct, air for cooling is normally introduced into the duct, and a suction blower is connected at the downstream side of the bag filter. The exhaust gas is accompanied with the vapour of various low boiling point heavy metal and salt contained in the incineration fly ash, and these are condensed by lowering the temperature of the exhaust gas. However, since the particle size of the condensed matter is very small, the bag filter is most effective to stably and securely remove these.

It is preferable to use a burner furnace wherein a reservoir for the melted matter is formed at the bottom of the furnace lower than the outlet, and the vent is disposed at the upper portion of the furnace side wall higher than the tip portion of the oxygen burner . When the reservoir for the melted matter is formed at the bottom of the furnace, the bottom wall of the furnace can be protected by the melted matter in the reservoir against the high temperature flame of the oxygen burner burning downward , and the gas discharge from the melted matter can also be made for effective usage thereof. Further, although it is necessary to preheat the entire burner furnace up to a predetermined high temperature when the melt of the incineration fly ash starts or recommences, when the vent is disposed at the upper portion of the furnace side wall higher than the tip portion of the oxygen burner , the entire burner furnace is preheated by the exhaust gas so that the problem of preheating can be avoided , and further the flame can be held at high temperature by the exhaust gas rising around the flame of the oxygen burner.

Further, it is preferable to use a burner furnace wherein a protective tube made of refractory material is inserted from the furnace cover into the inside of the furnace, a water-cooled oxygen burner is inserted in the space portion surrounded by the protective tube, and a flow path for a purge gas is formed between the protective tube and the water-cooled oxygen burner . If the oxygen burner itself is heated to a high temperature, the fuel supplied to the fuel supply nozzle of the oxygen burner evaporates so that a so-called vapour lock phenomenon is caused, or the fuel is resolved by heat so that the fuel supply nozzle may be closed by carbon produced by the heat resolution. However, when a water-cooled oxygen burner is used in which cooling water flows therearound, these disadvantages can be prevented. However, if the water-cooled oxygen burner is exposed in the space of the furnace as it is, the heat loss is large, and the water-cooled oxygen burner may be corroded by an acid gas produced by melting the incineration fly ash to cause water leakage. Accordingly, the water-cooled oxygen burner is surrounded by the protective tube of refractory material, and the purge gas flows between them, so that heat loss is reduced and water leakage due to corrosion is prevented.

In the present invention , although the incineration fly ash can be separately subjected to the melting treatment , it is preferable to carry out a melting treatment of a mixture of incineration fly ash and glass refuse and/or incinerate bottom ash. This is because, although the incineration fly ash containing a large amount of CaO has a high melting point, if glass refuse or incinerate bottom ash containing a large amount of SiO₂ is mixed with the incineration fly ash to form an eutectic material of CaO and SiO₂, the melting point thereof becomes low so that the melting treatment becomes easy. In this case, the glass refuse or incineration bottom ash is dried to a water content of 3 weight % or less and is broken into pieces with an average particle size of 0.1mm or less. Further, the incineration fly ash and the glass refuse and/or incinerate bottom ash are mixed to achieve CaO/SiO₂ (weight ratio) = 0.3 - 1.2 in these components. The glass refuse and incineration bottom ash are dried to the water content of 3 weight % or less in order to prevent them from causing clogging during gas transportation and to prevent them from causing heat loss at melting. Also, they are broken into pieces with an average particle size of 0.1mm or less in order to melt the incineration fly ash and the glass refuse and/or incineration bottom ash at as similiar a rate as possible to easily produce a eutectic material of CaO and SiO₂ since the average particle size of the incineration fly ash is originally about 0.05 - 0.2mm. Further, the incineration fly ash and the glass refuse and/or incineration bottom ash are mixed to achieve CaO/SiO₂ (weight ratio) = 0.3 - 1.2 because of the following reason . That is , if CaO/SiO₂ (weight ratio) is less than 0.3, the viscosity of the produced melted matter becomes large and it becomes hard to discharge such melted matter from the outlet of the burner furnace. On the contrary, if CaO/SiO₂ (weight ratio) exceeds 1.2, the amount of free CaO contained in the produced melted matter becomes large so that effective usage of the melted matter is inconvenient.

The invention will be further described, by way of example only, with reference to the accompanying drawings, in which:
Fig. 1 is a view schematically showing the entire operation of an embodiment of the present invention;
Fig. 2 is an enlarged vertical sectional view showing an insertion portion of a water-cooled oxygen burner in the burner furnace of Fig. 1; and
Fig. 3 is an enlarged bottom view showing a tip portion of the water-cooled oxygen burner of Fig. 1.

A burner furnace 11 comprises a furnace body 12 and a furnace cover 13 covering the furnace body 12, and the inner surface of these is made of refractory materials.

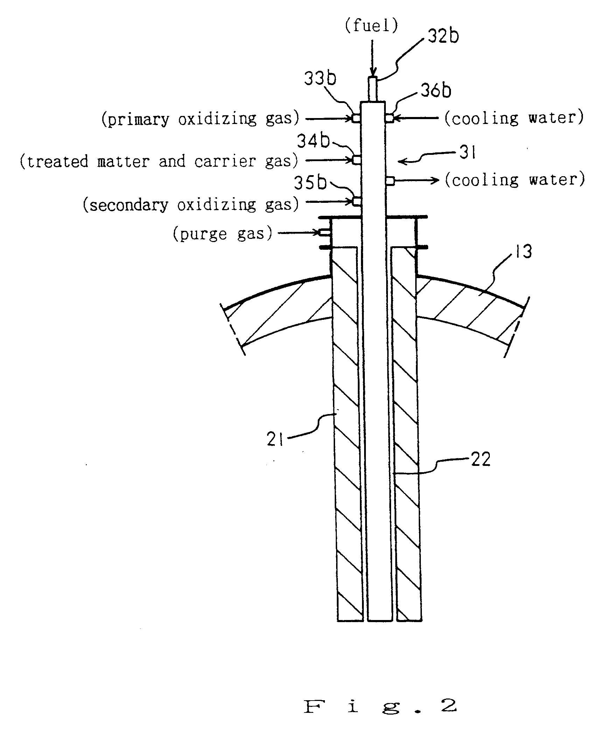

A protective tube 21 (see Fig. 2) made of a refractory material is inserted into the space in the furnace surrounded by the refractory material from the furnace cover 13 in the vertical direction . A water - cooled oxygen burner 31 is inserted into the space surrounded by the protective tube 21, and a flow path 22 for a purge gas is formed between the protective tube 21 and the water-cooled oxygen burner 31.

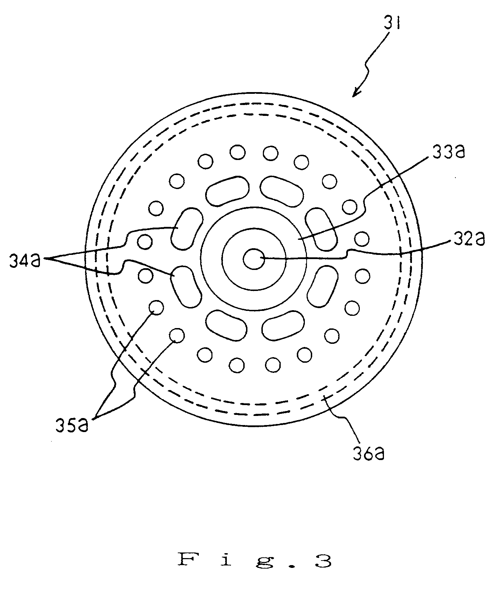

The water-cooled oxygen burner 31 has a structure as shown in Fig. 3 wherein nozzles at the tip portion thereof are arranged in the order of a fuel supply nozzle 32a, a primary oxidizing gas supply nozzle 33a, a treated matter supply nozzle 34a, and a secondary oxidizing gas supply nozzle 35a from the center portion to the outer portion so that the entire nozzles are concentrically arranged. A flow path 36a for cooling water is formed at the outside of the secondary oxidizing gas supply nozzle 35a.

A fuel supply system 41 is connected to a fuel supply port 32b communicating with the fuel supply nozzle 32a of the water-cooled oxygen burner 31, and a primary oxidizing gas supply system 42 is connected to a primary oxidizing gas supply port 33b communicating with the primary oxidizing gas supply nozzle 33a. Further, a treated matter supply system 43 is connected to a treated material supply port 34b communicating with the treated material supply nozzle 34a, and a secondary oxidizing gas supply system 44 is connected to a secondary oxidizing gas supply port 35b communicating with the secondary oxidizing gas supply nozzle 35a. The treated matter supply system 43 is branched into an incineration fly ash supply system 45 and a glass refuse supply system 46 at the upstream side thereof. The incineration fly ash supply system 45 is equipped with a hopper 53 through a rotary valve 51. Also, the glass refuse supply system 46 is equipped with a hopper 54 through a rotary valve 52. The hopper 53 reserves incineration fly ash A, and the hopper 54 reserves broken, dried and filtered glass refuse B.

An outlet 61 for melted matter C is disposed at the lower portion of the furnace side wall of the furnace body 12, a reservoir 62 for melted matter C is formed at the furnace bottom portion lower than the outlet 61, and a vent 63 for a exhaust gas is disposed at the upper portion of the furnace side wall higher than the tip portion (lower end) of the water-cooled oxygen burner 31. An air-cooled pan 71 is disposed outside the furnace and below the outlet 61, and a cover 72 seals a portion between the outlet 61 and the air-cooled pan 71. A duct 73 is connected to the vent 63, and a bag filter 74 and a suction blower 75 are connected to the downstream side of the duct 73.

When fuel, primary oxidizing gas and secondary oxidizing gas are supplied to the respective corresponding nozzles of the water-cooled oxygen burner 31 while cooling water is supplied into the flow path 36a of the water-cooled oxygen burner 31, a high temperature flame burning downward is formed from the tip portion of the water-cooled oxygen burner 31. In this state, while purge gas is supplied into the flow path 22 between the protective tube 21 and the water-cooled oxygen burner 31, a mixture of incineration fly ash A reserved in the hopper 53 and glass refuse B reserved in the hopper 54 is supplied to the treated matter supply nozzle 34a of the water-cooled oxygen burner 31 by gas transportation using a carrier gas. At this time, the opening degrees of the rotary valves 51 and 52 are adjusted so that the supply amounts of both are adjusted to achieve CaO/SiO₂ (weight ratio) = 0.3 - 1.2. The mixture is directly supplied into the high temperature flame of the water-cooled oxygen burner 31 burning downward and is melted.

The produced melted matter C is temporarily reserved in the reservoir 62, and then falls by its own weight into the air-cooled pan 71 due to overflow from the outlet 61, and is cooled there. On the other hand, the generated exhaust gas is cooled by air and sucked to the bag filter 74 through the duct 73, where condensed matter from the exhaust gas is removed and then the clean gas is released.

### Example 1

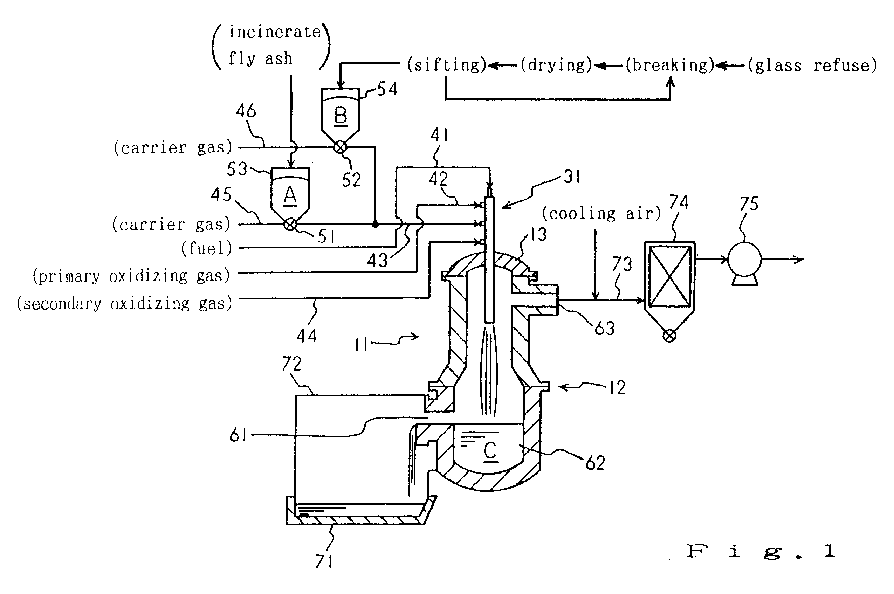

In accordance with the embodiment described with reference to Figs. 1-3, a mixture of incineration fly ash and glass refuse is subjected to melting treatment under conditions as follows.

Incineration fly ash: Incineration fly ash (water content was 0.5 weight % , average particle size was 0.08 mm) caught by a dust collecting device of an air pollution control system equipped with an incinerator.

Glass refuse: Refuse from a glass manufacturing factory, which was pulverized, dried, and filtered through a filter with openings of 0.1 mm (water content was 2 weight %, average particle size was 0.08 mm).

Mixture: Mixture of the incineration fly ash and the glass refuse in which CaO/SiO₂ (weight ratio) = 0.8 in these components was achieved (melting point was about 1350°C).

### Fuel: Propane gas

Primary oxidizing gas and secondary oxidizing gas: Gas with oxygen concentration of 93 vol.% (residue was almost nitrogen gas).

### Carrier gas: Air

When the mixture was subjected to melting treatment under the above described conditions, the temperature of the high temperature flame of the water-cooled oxygen burner burning downward was above 1800°C so that the mixture could be stably and completely melted.

As will be apparent, the present invention as described above has the effect that incineration fly ash can be stably and completely subjected to a melting treatment.

## Claims

1. A method of melting treatment of incineration fly ash by subjecting incineration fly ash (A) to melting treatment using a burner furnace (11), characterized by supplying incineration fly ash by gas transportation into a high temperature flame of an oxygen burner (31) burning downward and melting the same, discharging melted matter (C) from an outlet (61) at a lower portion of a furnace side wall, and discharging generated exhaust gas from a vent (63) at an upper portion of the furnace side wall.

2. A method as claimed in claim 1, characterized in that condensed matter from the exhaust gas discharged from the vent (63) is caught by a bag filter (74).

3. A method as claimed in claim 1 or 2, characterized in that the incineration fly ash (A) and glass refuse (B) and/or incineration bottom ash having water content of 3 weight % or less and average particle size of 0.1mm or less are mixed with each other to form a mixture in which CaO/SiO₂ (weight ratio) = 0.3 - 1.2, and the mixture is supplied into the high temperature flame of the oxygen burner (31).

4. A method as claimed in any of claims 1 to 3, characterized in that an oxidizing gas for the oxygen burner (31) has oxygen concentration of 90 vol % more.

5. A method as claimed in any of claims 1 to 4, characterized in that the burner furnace (11) has a reservoir (62) for melted matter (C) formed at a furnace bottom lower than the outlet (61), and the vent (63) is disposed at the upper portion of the furnace side wall higher than a tip portion of the oxygen burner (31).

6. A method as claimed in any of claims 1 to 5, characterized in that the oxygen burner (31) has nozzles at the tip portion thereof arranged in the order of a fuel supply nozzle (32a), a primary oxidizing gas supply nozzle (33a), a treated matter supply nozzle (34a), and a secondary oxidizing gas supply nozzle (35a) from the center portion of the oxygen burner to the outer portion so that the entire nozzles are concentrically arranged.

7. A method as claimed in any of claims 1 to 6, characterized in that the burner furnace (11) has a protective tube (21) made of a refractory material inserted from a furnace cover (13) into the inside of the furnace, and the water-cooled oxygen burner (31) is inserted into a space surrounded by the protective tube (21), and a flow path (22) of a purge gas is formed in a gap between the protective tube (21) and the water-cooled oxygen burner (31).

## Patentansprüche

1. Verfahren zur Schmelzbehandlung von Verbrennungsflugaschen wobei die Verbrennungsflugaschen (A) einer Schmelzbehandlung unter Einsatz eines Brennerofens (11) unterzogen werden, gekennzeichnet durch eine Zufuhr von Verbrennungsflugaschen mittels eines Gastransportes in eine Hochtemperaturflamme eines Sauerstoffbrenners (31) mit nach unten gerichteter Flamme sowie ein Schmelzen derselben, durch ein Abziehen von geschmolzenem Material (C) durch einem Ausfluß (61) in einem tiefergelegenen Teil einer Ofenseitenwand, sowie durch das Ablassen des erzeugten Abgases durch eine Entlüftungsöffnung (63) in einem höheren Teil der Ofenseitenwand.

2. Verfahren wie in Anspruch 1 beansprucht, dadurch gekennzeichnet, daß kondensierte Materie aus dem Abgas, welches durch die Entlüftungsöffnung (63) ausgestoßen wird, in einem Sackfilter (74) aufgefangen wird.

3. Verfahren wie in Anspruch 1 oder 2 beansprucht, dadurch gekennzeichnet, daß die Verbrennungsflugaschen (A) und Abfallglas (B) und/oder Verbrennungsbodenasche mit einem Wassergehalt von 3 Gewichtsprozent oder weniger und einer durchschnittlichen Partikelgröße von 0,1 mm oder weniger miteinander vermischt werden, um ein Gemisch zu bilden in welchem CaO/SiO₂ (Gewichtsverhältnis) = 0,3 - 1,2 ist und daß das Gemisch in die Hochtemperaturflamme des Sauerstoffbrenners (31) eingebracht wird.

4. Verfahren wie in irgendeinem der Ansprüche 1 bis 3 beansprucht, dadurch gekennzeichnet, daß ein für den Sauerstoffbrenner (31) bestimmtes oxydierendes Gas eine Sauerstoffkonzentration von 90 Volumenprozent oder mehr aufweist.

5. Verfahren wie in irgendeinem der Ansprüche 1 bis 4 beansprucht, dadurch gekennzeichnet, daß der Brennerofen (11) ein Speicherbecken (62) für geschmolzene Materie (C) aufweist, welches in einem tiefer als der Ausfluß (61) liegenden Ofenboden ausgebildet ist und daß die Entlüftungsöffnung (63) in dem oberen Teil der Ofenseitenwand angeordnet ist, höher als das Mündungsstück des Sauerstoffbrenners (31).

6. Verfahren wie in irgendeinem der Ansprüche 1 bis 5 beansprucht, dadurch gekennzeichnet, daß der Sauerstoffbrenner (31) an seinem Mündungsstück Düsen aufweist, welche in der folgenden Reihenfolge angeordnet sind: eine Brennstoffzufuhrdüse (32a), eine Zufuhrdüse für das primäre Oxydationsgas (33a), eine Zufuhrdüse für die behandelte Materie (34a) und eine Zufuhrdüse für das sekundäre Oxydationsgas (35a), dies von dem zentralen Teil des Sauerstoffbrenners aus in Richtung auf den außenliegenden Teil gesehen, so daß die ganzen Düsen konzentrisch angeordnet sind.

7. Verfahren wie in irgendeinem der Ansprüche 1 bis 6 beansprucht, dadurch gekennzeichnet, daß der Brennerofen (11) ein Schutzrohr (21) aufweist, welches aus einem feuerfesten Material hergestellt ist und von dem Ofendeckel (13) aus ins Innere des Ofens eingeführt wird, daß der wassergekühlte Sauerstoffbrenner (31) in einen von dem Schutzrohr (21) umgebenen Raum eingeführt wird und daß ein Strömungsweg (22) für ein Spülgas in einem Zwischenraum zwischen dem Schutzrohr (21) und dem wassergekühlten Sauerstoffbrenner (31) ausgebildet ist.

## Revendications

1. Procédé pour le traitement de fusion de cendres volantes d'incinération en soumettant les cendres volantes d'incinération (A) à un traitement de fusion en utilisant un four à brûleur (11), caractérisé en ce que l'on introduit des cendres volantes d'incinération au moyen d'un transport par gaz dans une flamme à haute température d'un brûleur à oxygène (31) qui dirige la flamme vers le bas et qui fond celles-ci, l'on décharge de la matière fondue (C) par une sortie (61) dans la partie inférieure d'une paroi latérale du four, et que l'on décharge les gaz de combustion générés à travers une ouverture (63) dans une partie supérieure de la paroi latérale du four.

2. Procédé tel que revendiqué dans la revendication 1, caractérisé en ce que de la matière condensée à partir des gaz de combustion déchargés à travers l'ouverture (63) est captée par un sac de filtration (74).

3. Procédé tel que revendiqué dans la revendication 1 ou 2, caractérisé en ce que les cendres volantes d'incinération (A) et des déchets de verre (B) et/ou des cendres de fond d'incinération avec une teneur en eau de 3% en poids ou moins et une dimension moyenne des particules de 0,1 mm ou moins sont mélangés les uns aux autres pour former un mélange dans lequel CaO/SiO₂ (rapport en poids) = 0,3 - 1,2 et que le mélange est alimenté dans une flamme à haute température du brûleur à oxygène (31).

4. Procédé tel que revendiqué dans l'une quelconque des revendications 1 à 3, caractérisé en ce qu'un gaz oxydant pour le brûleur à oxygène (31) contient une concentration en oxygène de 90% en volume ou plus.

5. Procédé tel que revendiqué dans l'une quelconque des revendications 1 à 4, caractérisé en ce que le four à brûleur (11) est pourvu d'un réservoir (62) pour de la matière fondue (C) formée dans un fond de four situé plus bas que la sortie (61) et en ce que l'ouverture (63) est disposée dans la partie supérieure de la paroi latérale du four, plus haut qu'une partie formant la tête du brûleur à oxygène (31).

6. Procédé tel que revendiqué dans l'une quelconque des revendications 1 à 5, caractérisé en ce que le brûleur à oxygène (31) est pourvu, dans la partie qui forme sa tête, de tuyères arrangées dans l'ordre prévoyant une tuyère d'alimentation en combustible (32a), une tuyère d'alimentation en gaz primaire d'oxydation (33a), une tuyère d'alimentation en matière traitée (34a) ainsi qu'une tuyère d'alimentation en gaz secondaire d'oxydation (35a), vus de la partie centrale du brûleur à oxygène en direction de la partie extérieure, de sorte que tous les tuyères sont arrangées de manière concentrique.

7. Procédé tel que revendiqué dans l'une quelconque des revendications 1 à 6, caractérisé en ce que le four à brûleur (11) est pourvu d'un tube protecteur (21) fait d'un matériau réfractaire inséré depuis un couvercle de four (13) dans l'intérieur du four, que le brûleur à oxygène refroidi à l'eau (31) est inséré dans un espace entouré par le tube protecteur (21) et qu'une voie d'écoulement (22) d'un gaz de purge est formée dans un espace vide entre le tube protecteur (21) et le brûleur à oxygène refroidi à l'eau (31).
